# DEMANDE DE BREVET EUROPEEN

(11) **EP 4 810 440 A1**
(43) Date de publication de la demande: **23.09.2026**
(21) Numéro de dépôt: 26165804.1
(22) Date de dépôt: 18.03.2026
(51) Int. Cl.: C01B 25/455, C01G 45/06, H01M 4/505, C01G 45/1228, H01M 4/1315, H01M 10/0525

(54) **COMPOSES DE TYPE OXYDE LITHIE A HAUT TAUX DE FLUOR ET CONTENANT DU PHOSPHORE, LEUR PROCEDE D OBTENTION, ET LEURS UTILISATIONS**

(30) Priorité: 19.03.2025 FR 2502782
(71) Demandeur: Commissariat à l'Energie Atomique et aux Energies Alternatives, 75015 Paris (FR)
(72) Inventeur: COGNIARD, Mathieu, 38054 GRENOBLE (FR); COLIN, Jean-François, 38054 GRENOBLE (FR); BIECHER, Yohan, 38054 GRENOBLE (FR)
(74) Mandataire: Gevers & Orès

(57) **Abrégé**

La présente invention concerne des composés de type oxyde lithié à haut taux de fluor et contenant du phosphore, ainsi que leur procédé d'obtention. L'invention vise également la préparation et l'utilisation desdits composés en tant que matériaux actifs d'électrodes positives, en particulier d'accumulateurs métal-ion, ainsi que lesdits matériaux actifs et électrodes *per se.*

## Description

La présente invention concerne des composés de type oxyde lithié à haut taux de fluor et contenant du phosphore, ainsi que leur procédé d'obtention. L'invention vise également la préparation et l'utilisation desdits composés en tant que matériaux actifs d'électrodes positives, en particulier d'accumulateurs métal-ion, ainsi que lesdits matériaux actifs et électrodes *per se.*

Les oxydes mixtes lamellaires, souvent désignés par l'acronyme NMC (Nickel, Manganèse, Cobalt), sont des matériaux largement utilisés dans les batteries lithium-ion. Leur formule générale est LiNiₓMn_{y}Co_{z}O₂, où les proportions de nickel, manganèse et cobalt peuvent varier pour optimiser les propriétés du matériau.

Les NMC sont principalement utilisés comme matériaux de cathode dans les batteries lithium-ion, qui alimentent une variété d'appareils électroniques, des smartphones aux véhicules électriques. Leur structure lamellaire permet une intercalation efficace des ions lithium, ce qui est avantageux pour le fonctionnement des batteries.

Les NMC offrent une densité d'énergie élevée (typiquement une capacité spécifique de l'ordre de 200 mAh/g, et une densité d'énergie de l'ordre 740 Wh/kg_{matériau}), ce qui permet de stocker plus d'énergie dans un volume donné.

Cependant, le coût des NMC est élevé, voire problématique, notamment à cause de la présence de cobalt et de nickel, matériaux coûteux et sujets à de forte variations de prix. Et l'extraction du cobalt pose des problèmes éthiques, ayant un coût humain et environnemental élevé.

Des matériaux ayant une structure dite cubique désordonnée de type NaCl (ou « disordered rocksalt » en anglais, désignés ci-après par l'acronyme DRS), ont été proposés comme une alternative bas coût à la technologie NMC actuelle.

En effet, certains DRS présentent l'avantage d'être composés principalement de manganèse, un métal abondant, tout en délivrant des performances électrochimiques comparables aux NMC, avec des capacités de l'ordre de 250 mAh/g et une densité d'énergie de l'ordre de 900 Wh/ kg_{matériau}.

Néanmoins, l'inconvénient majeur des matériaux DRS est pour le moment une mauvaise stabilité en cyclage, avec une chute assez rapide des performances ; cette dégradation est principalement liée à l'évolution structurale irréversible (migration cationique, et diminution locale du taux Li/Mn) du matériau causée par la participation des ions oxygènes aux procédés d'oxydoréductions. Cette évolution structurale se traduit par une chute de la capacité de la cellule, mais aussi par la diminution du potentiel moyen de décharge en cyclage.

Un objectif de l'invention est ainsi de fournir des composés qui ne présentent pas les inconvénients précités.

En particulier, un objectif de l'invention est de fournir des composés susceptibles d'être utilisés avec succès pour la préparation d'électrodes positives, en particulier d'accumulateurs métal-ion (le métal étant en particulier un métal alcalin ou alcalino-terreux, par exemple Li), à haute capacité (en particulier plus de 200, 250 ou 300 mAh/g) et à bas coût.

Un autre objectif de l'invention est de fournir des matériaux d'électrodes positives permettent de limiter la dégradation des performances, ayant notamment une rétention avantageuse de la capacité en cyclage, notamment plus élevée que celle relatives aux dispositifs de l'art antérieur, tout en s'affranchissant de métaux critiques d'un point de vue économique et/ou toxiques, comme le cobalt.

Aussi, l'invention concerne un composé de formule (I) suivante :

Li₂₋ₓMnPₓO₂F (I),

avec : $0 < x \leq 0 , 25 .$

De façon surprenante, et sans vouloir se restreindre à une quelconque théorie, la combinaison, dans les composés de l'invention, de haut taux de fluor (33% de fluor dans le site anionique) et la présence de tétraèdres PO₄ (tels que formés quand le phosphore cristallise) dans le réseau cristallin cubique désordonné permettent de limiter la dégradation des performances en inhibant l'évolution structurale du matériau et en permettant donc une meilleure stabilité. Or les sites cationiques des métaux dans la structure de type « rocksalt » sont octaédriques. Il n'est donc pas évident d'envisager une solution solide en utilisant du phosphore.

Ainsi le rapport Li/Mn est de (2-x), et le degré d'oxydation du manganèse dans le composé de formule (I) selon l'invention est de (3-4x).

Le rapport Li/Mn est donc supérieur ou égal à 1,75 et inférieur à 2.

Et le degré d'oxydation du manganèse est donc supérieur ou égal à 2 et inférieur à 3.

Ces valeurs permettent l'obtention d'une capacité théorique du manganèse élevée (en particulier 265 mAh/g ou plus voire plus de 300 mAh/g), tout en obtenant une stabilité améliorée.

Selon un mode de réalisation particulier, x est tel que 0 < x ≤ 0,20 ; en particulier tel que 0 < x ≤ 0,15 ; plus particulièrement tel que 0 < x ≤ 0,10.

Selon un mode de réalisation particulier, x est tel que x ≥ 0,05 ; en particulier tel que x ≥ 0,1.

Selon un mode de réalisation particulier, x est d'environ 0,05 ; d'environ 0,1 ; d'environ 0,15 ; d'environ 0,2 ; ou de 0,25.

Selon un mode de réalisation particulier, x est d'environ 0,1.

Selon un mode de réalisation particulier, le composé de l'invention est choisi parmi les composés suivants :
- Li_{1.95}MnP_{0.05}O₂F;
- Li_{1.90}MnP_{0.10}O₂F;
- Li_{1.85}MnP_{0.15}O₂F;
- Li_{1.80}MnP_{0.20}O₂F;
- Li_{1.75}MnP_{0.25}O₂F.

Selon un mode de réalisation particulier, le composé de l'invention est de structure cubique désordonnée de type NaCl, ou substantiellement de structure cubique désordonnée de type NaCl.

La structure dite cubique désordonnée de type NaCl est également connue sous le nom « disordered rocksalt » en anglais, pouvant aussi être désigné par l'acronyme DRS. Cette structure est généralement caractérisée par une répartition statistique des cations et anions au sein de leur site cristallographique, et par un excès de lithium par rapport aux métaux de transitions (TM), ici le manganèse. Sans vouloir se restreindre à une quelconque théorie, cet excès de lithium est susceptible d'assurer une conductivité ionique au matériau.

Selon un mode de réalisation particulier, le composé de l'invention est de structure cubique désordonnée de type NaCl, ou substantiellement de structure cubique désordonnée de type NaCl, ladite formule (I) étant telle que x < 0,25, en particulier telle que x ≤ 0,20, x < 0,20, x ≤ 0,15 ou x ≤ 0,10.

Selon un autre aspect, la présente invention concerne également un procédé de préparation d'un composé de formule (I) tel que défini précédemment, comprenant une étape de mécanosynthèse à partir des précurseurs suivants, en particulier sous forme de poudre :
- oxyde de lithium (Li₂O) et/ou Li₂CO₃,
- phosphate de lithium (Li₃PO₄),
- fluorure de lithium (LiF) et/ou MnF₂, et
- au moins un oxyde de manganèse.

Tous les modes de réalisation décrits précédemment relativement au composé de formule (I) de l'invention s'appliquent également ici, seuls ou en combinaison.

Par « mécanosynthèse », on entend notamment un procédé consistant à broyer ensemble les différents précurseurs, jusqu'à obtention dudit composé de formule (I).

Le composé de formule (I) est donc typiquement obtenu sous forme de poudre à l'issue de l'étape de mécanosynthèse.

Les quantités de précurseurs à employer pour l'obtention dudit composé de formule (I) sont aisément calculées par l'homme du métier.

Selon un mode de réalisation particulier, le au moins un oxyde de manganèse est Mn₂O₃ et/ou MnO.

Selon un mode de réalisation particulier, l'étape de mécanosynthèse est réalisée par broyage planétaire.

Les broyeurs planétaires sont bien connus de l'homme du métier. Il peut par exemple s'agir d'un bol de broyage en zircone stabilisée comprenant des billes en zircone, par exemple d'un diamètre de 5 mm environ.

Selon un autre aspect, l'invention concerne également un composé, en particulier sous forme de poudre, susceptible d'être obtenu selon l'un des procédés définis précédemment.

Selon un autre aspect, l'invention concerne également l'utilisation d'un composé de formule (I) tel que défini précédemment pour la préparation d'une électrode, en particulier positive, notamment pour une pile ou un accumulateur métal-ion, en particulier Li-ion.

Tous les modes de réalisation décrits précédemment relativement au composé de formule (I) de l'invention s'appliquent également ici, seuls ou en combinaison.

Selon un autre aspect, l'invention concerne également une poudre constituée de ou comprenant des particules de composé de formule (I) tel que défini précédemment.

Tous les modes de réalisation décrits précédemment relativement au composé de formule (I) de l'invention s'appliquent également ici, seuls ou en combinaison.

Selon un mode de réalisation particulier, les particules ont une taille comprise de 50 nm à 30 µm, en particulier de 50 nm à 10 µm.

Par « taille », on entend en particulier la plus grande dimension d'une particule.

Cette taille est en particulier une taille moyenne déterminé par granulométrie laser.

Selon un mode de réalisation particulier, la poudre telle que définie précédemment comprend en outre un additif conducteur électronique, en particulier des particules de carbone, et optionnellement, un liant.

L'additif conducteur électronique, bien connu de l'homme du métier, peut être constitué de ou comprendre du carbone dur et/ou du graphite.

Par « particules de carbone », on entend des particules constituant du noir de carbone.

Par « noir de carbone », on entend notamment une composition pulvérulente de carbone sous forme amorphe, laquelle est en particulier sous la forme d'une poudre constituée de ou comprenant des particules sphériques ou sphéroïdes de 5 à 500 nm (plus grande dimension), notamment inférieures à 100 nm.

Selon un mode de réalisation particulier, les particules de composé de formule (I) sont mélangées à un additif conducteur électronique, en particulier des particules de carbone constituant alors un matériau composite. Dans ce composite, les particules d'additif, en particulier de carbone, sont distribuées de telle sorte qu'elles enveloppent les particules de composé de formule (I).

Selon un mode de réalisation particulier, le rapport de la masse des particules de composé de formule (I) sur la masse d'additif conducteur électronique, en particulier des particules de carbone est compris de 90/5 ou 80/10 à 50/40, ce rapport étant par exemple de 75/15.

Selon un autre mode de réalisation particulier, le rapport de la masse de composé de formule (I) sur la masse d'additif conducteur électronique, en particulier des particules de carbone est compris de 96/2 à 90/5.

Selon un mode de réalisation particulier, la poudre telle que définie précédemment comprend en outre un additif conducteur électronique, en particulier des particules de carbone, et optionnellement, un liant.

Selon un mode de réalisation particulier, le liant est un polymère, notamment choisi parmi polyfluorure de vinylidène (PVDF).

Selon un mode de réalisation particulier, la poudre telle que définie précédemment, comprend, en masse :
- de 50 à 80% de particules de composé de formule (I) tel que défini précédemment, en particulier 75% ;
- de 10 à 30% de particules de carbone, en particulier 15% ; et
- de 5 à 20% de liant, en particulier 10%.

Selon un mode de réalisation particulier, la poudre telle que définie précédemment, comprend, en masse :
- de 90 à 96% de particules de composé de formule (I) tel que défini précédemment ;
- de 2 à 6% de particules de carbone, en particulier ; et
- de 2 à 4% de liant.

Selon un autre aspect, l'invention concerne également une électrode, en particulier positive, notamment pour une pile ou un accumulateur métal-ion, en particulier Li-ion, comprenant un composé de formule (I) tel que défini précédemment.

Tous les modes de réalisation décrits précédemment relativement au composé de formule (I) de l'invention s'appliquent également ici, seuls ou en combinaison.

Selon un autre aspect, l'invention concerne également un procédé de préparation d'une électrode, en particulier positive, notamment pour une pile ou un accumulateur métal-ion, en particulier Li-ion, ledit procédé comprenant une étape A) de mise en contact d'une poudre constituée de ou comprenant un composé de formule (I) tel que défini précédemment, un additif conducteur électronique, en particulier des particules de carbone, et optionnellement un liant, avec un support conducteur.

Tous les modes de réalisation décrits précédemment relativement au composé de formule (I) de l'invention s'appliquent également ici, seuls ou en combinaison.

Selon un mode de réalisation particulier, le support conducteur est un support métallique, le métal étant en particulier l'aluminium (Al).

Selon un mode de réalisation particulier, le procédé de l'invention tel que défini précédemment comprend :
A₀) une étape de préparation d'une encre par ajout d'un solvant, notamment choisi parmi la N-méthyl-2-pyrrolidone (NMP), à une poudre constituée de ou comprenant des particules de composé de formule (I), un additif conducteur électronique, en particulier des particules de carbone et optionnellement un liant, le liant étant par exemple dissous au préalable dans un solvant, notamment la N-méthyl-2-pyrrolidone (NMP), telle que définie précédemment, et, optionnellement homogénéisation, en particulier par agitation mécanique, pour obtenir une suspension ;
A) une étape A) de mise en contact d'une suspension telle qu'obtenue à l'issue de l'étape A), avec un support conducteur, notamment par enduction, par exemple de type « doctor blade » pour obtenir un dispositif ;
B) optionnellement, une étape de séchage dudit dispositif ;
C) optionnellement une étape de mise en forme, notamment par pastillage, dudit dispositif, éventuellement séché, notamment à une température comprise de 50 à 100°C, en particulier à environ 60°C, et/ou pendant 1 à 48 heures, par exemple pendant environ 24 heures.

Selon un autre aspect, l'invention concerne également une pile ou un accumulateur comprenant une électrode, en particulier positive, comprenant un composé de formule (I) tel que défini précédemment, ayant notamment une capacité théorique supérieure à 200 mAh/g.

Tous les modes de réalisation décrits précédemment relativement au composé de formule (I) de l'invention s'appliquent également ici, seuls ou en combinaison.

Selon un mode de réalisation particulier, la pile ou l'accumulateur tel que défini précédemment comprend en outre au moins un électrolyte, un séparateur, en particulier microporeux, et une électrode négative, en particulier étant constituée de ou comprenant un métal, plus particulièrement Li.

Ces éléments sont bien connus de l'homme du métier, qui pourra les sélectionner, notamment parmi les éléments du commerce, selon les besoins.

L'électrode négative peut également être constituée de ou comprenant du carbone dur ou du graphite.

Les piles et les accumulateurs de l'invention peuvent par exemple être utilisées dans le domaine du stockage électrique, notamment stationnaire, ou en mobilité électrique, notamment pour de l'électronique portable ou mettable, en intégration dans des fibres et/ou des câbles, en particulier dans le cadre de batteries filaires, ou pour un usage médical.

En particulier, les piles et les accumulateurs de l'invention peuvent être utilisées dans le domaine de la mobilité électrique, notamment pour véhicules électriques, véhicules électriques hybrides rechargeables, véhicules hybrides, ou 2 roues électriques.

En particulier, les piles et les accumulateurs de l'invention peuvent être utilisées dans le domaine de l'électroportatif, notamment téléphonie, ordinateurs portables, ou outillage portatif.

Selon un autre aspect, l'invention concerne également une batterie comprenant une pile ou un accumulateur tel(le) que défini(e) précédemment.

Tous les modes de réalisation décrits précédemment relativement au composé de formule (I) de l'invention s'appliquent également ici, seuls ou en combinaison.

Selon un autre aspect, l'invention concerne également un système électroportatif ou adapté à la mobilité électrique, comprenant une batterie telle que définie précédemment.

Tous les modes de réalisation décrits précédemment relativement au composé de formule (I) de l'invention s'appliquent également ici, seuls ou en combinaison.

### DEFINITIONS

Tel qu'on l'entend ici, les plages de valeur sous forme de « x-y » ou « de x à y » ou « entre x et y » incluent les bornes x et y, les entiers compris entre ces bornes, ainsi que tous les autres nombres réels compris entre ces bornes. A titre d'exemple, « 1-5 », ou « de 1 à 5 » ou « entre 1 et 5 » désignent les entiers 1, 2, 3, 4 et 5, ainsi que tous les autres nombres réels compris entre 1 et 5. Les modes de réalisations préférés incluent chaque entier pris individuellement dans la plage de valeur, ainsi que toute sous-combinaison de ces entiers et tout ensemble de nombres réels compris entre ces entiers. A titre d'exemple, les valeurs préférées pour « 1-5 » peuvent comprendre les entiers 1, 2, 3, 4, 5, 1-2, 1-3, 1-4, 1-5, 2-3, 2-4, 2-5, etc.

Tel qu'on l'utilise dans la présente description, le terme « environ » se réfère à un intervalle de valeurs de ± 10 % d'une valeur spécifique. A titre d'exemple, l'expression « environ 20 » comprend les valeurs de 20 ± 10 %, soit les valeurs de 18 à 22.

Au sens de la présente description, les pourcentages se réfèrent à des pourcentages en masse par rapport à la masse totale de la formulation, sauf indication contraire.

### FIGURES

La **figure 1** présente le diffractogramme de matériaux Li₂₋ₓMnPₓO₂F de l'invention, selon l'exemple 7.
La **figure 2** présente l'évolution du paramètre de maille a des composés de l'invention en fonction du taux de phosphore, selon l'exemple 7.
La **figure 3** présente le tracé de la moyenne des potentiels moyens de charge et décharge ((V_{charge} + V_{décharge} )/2) des composés de l'invention, en fonction du nombre de cycle, selon l'exemple 8.

### EXEMPLES

Les composés ci-dessous ont été obtenus par mécano-synthèse, susceptible de favoriser l'intégration de haut taux de fluor dans les matériaux. Les compositions visées sont décrites dans les exemples et le tableau 1 suivants et leur synthèse peut être décrite par la réaction chimique suivante : $\left(\frac{1}{2}-2x\right) {Li}_{2} O + {xLi}_{3} {PO}_{4} + LiF + \left(\frac{1}{2}-2x\right) {Mn}_{2} {O}_{3} + 4 xMnO \to {Li}_{2 - x} {MnP}_{x} {O}_{2} F$

**Tableau 1 : masses de précurseurs utilisées pour la synthèse des matériaux Li₂₋ₓMnPₓO₂F**

| | Mn₂O₃ (g) | MnO (g) | LiF (g) | Li₂O (g) | Li₃PO₄ (g) |
|---|---|---|---|---|---|
| **Li₂MnO₂F** | 3.295 | | 1.082 | 0.673 | |
| **Li_{1.95}MnP_{0.05}O₂F** | 2.609 | 0.586 | 1.072 | 0.494 | 0.239 |
| **Li_{1.9}MnP_{0.1}O₂F** | 1.938 | 1.161 | 1.061 | 0.367 | 0.474 |
| **Li_{1.85}MnP_{0.15}O₂F** | 1.279 | 1.724 | 1.051 | 0.242 | 0.704 |
| **Li_{1.8}MnP_{0.2}O₂F** | 0.633 | 2.277 | 1.047 | 0.120 | 0.929 |
| **Li_{1.75}MnP_{0.25}O₂F** | | 2.819 | 1.031 | | 1.150 |

Dans ces exemples, le bol est chargé sous atmosphère inerte, et les précurseurs sont séchés (80°C) sous vide au préalable. Le mélange réactionnel est ensuite broyé pendant 40 heures à 450 tr/min à l'aide d'un broyeur planétaire Retsch PM 100. Après synthèse, les matériaux sont récupérés en boite à gants et stockés sous argon.

### Exemple 1 : préparation de Li₂MnO₂F (référence hors invention)

Dans un bol de broyage en zircone stabilisée (250 mL) sont ajoutés 3.367 g de Li₂O, 5.411 g de LiF, 16.473 g de Mn₂O₃ et 400 g de billes (d = 5 mm) en zircone.

### Exemple 2 : préparation de Li_{1.95}MnP_{0.05}O₂F de l'invention

Dans un bol de broyage en zircone stabilisée (250 mL) sont ajoutés 0.494 g de Li₂O, 1.072 g de LiF, 2.609 g de Mn₂O₃, 0.586 g de MnO, 0.239 g de Li₃PO₄ et 75 g de billes (d = 5 mm) en zircone.

### Exemple 3 : préparation de Li_{1.9}MnP_{0.1}O₂F de l'invention

Dans un bol de broyage en zircone stabilisée (250 mL) sont ajoutés 0.367 g de Li₂O, 1.061 g de LiF, 1.938 g de Mn₂O₃, 1.161 g de MnO, 0.474 g de Li₃PO₄ et 75 g de billes (d = 5 mm) en zircone.

### Exemple 4 : préparation de Li_{1.85}MnP_{0.15}O₂F de l'invention

Dans un bol de broyage en zircone stabilisée (250 mL) sont ajoutés 0.242 g de Li₂O, 1.051 g de LiF, 1.279 g de Mn₂O₃, 1.724 g de MnO, 0.704 g de Li₃PO₄ et 75 g de billes (d = 5 mm) en zircone.

### Exemple 5 : préparation de Li_{1.8}MnP_{0.2}O₂F de l'invention

Dans un bol de broyage en zircone stabilisée (250 mL) sont ajoutés 0.120 g de Li₂O, 1.047 g de LiF, 0.633 g de Mn₂O₃, 2.277 g de MnO, 0.929 g de Li₃PO₄ et 75 g de billes (d = 5 mm) en zircone.

### Exemple 6 : préparation de Li_{1.75}MnP_{0.25}O₂F de l'invention

Dans un bol de broyage en zircone stabilisée (250 mL) sont ajoutés 1.031 g de LiF, 2.819 g de MnO, 1.150 g de Li₃PO₄ et 75 g de billes (d = 5 mm) en zircone.

### Exemple 7 : Caractérisation des composés de l'invention

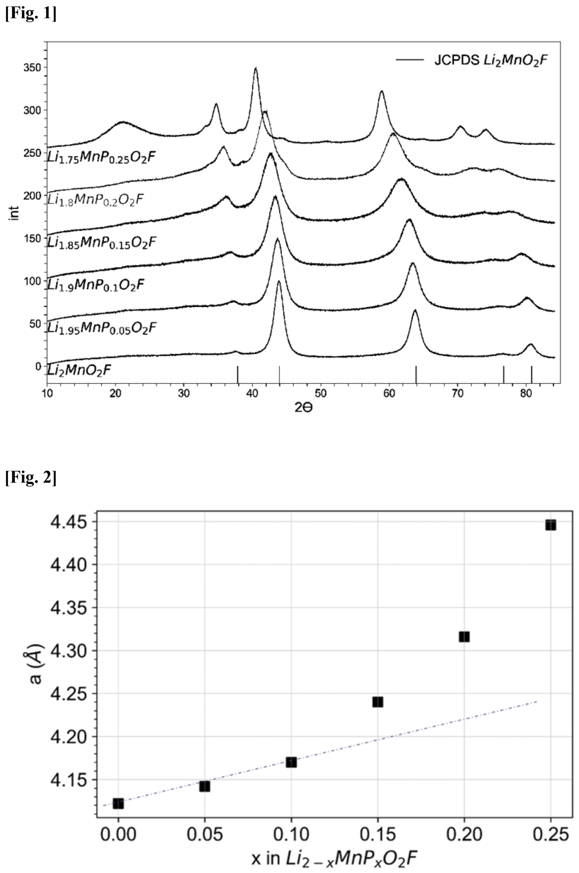

Les matériaux synthétisés sont caractérisés par diffraction des rayons X **(****Figure 1****)** afin de déterminer leur structure cristallographique. Pour x < 0.15 notamment, la structure des matériaux est cubique désordonnée de type NaCl (groupe d'espace Fm-3m), et l'évolution du paramètre de maille **(****Figure 2****)** varie linéairement avec le taux de phosphore, ce qui suggère que les groupements PO₄ sont situés au sein des sites interstitiels du réseau.

Lorsque x >= 0.15, le paramètre de maille ne varie plus linéairement avec x, et dans le cas de x = 0.2 et 0.25, l'apparition de nouveaux pics de diffractions suggèrent la formation d'une nouvelle phase.

### Exemple 8 : Préparation d'électrodes comprenant un matériau de l'invention

Les matériaux décrits ci-dessus ont été utilisés en tant que matériaux actifs d'électrode positive de batteries Li-ion.

Afin de réaliser des électrodes, une encre a été formulée en dispersant le matériau actif, du carbone C65 (Imerys) et le PVDF (polyfluorure de vinylidène - Solvay 5130) dans un solvant, de la NMP (1-méthyl-2-pyrrolidone - Sigma-Aldrich). Cette encre est enduite sur un collecteur de courant en aluminium directement en boîte à gants.

La composition massique finale de l'électrode est la suivante : 75% de matériau actif, 15 % de carbone C65 et 10 % de liant PVDF. Des pastilles de 14 mm sont découpées, et calandrées à 10 t à l'aide d'une presse. Le grammage des électrodes est de l'ordre de 1 mg/cm². Des piles boutons sont assemblées en boite à gants en utilisant le lithium métal comme électrode négative et de référence, et du Celgard 2400 comme séparateurs. L'électrolyte utilisé est le LP100 (1M LiPF6 dans EC/PC/DMC 1/1/3 vol.). Les bancs de cyclages utilisés sont produits par la marque Arbin. Le courant appliqué correspond à un C-rate de C/10, en utilisant 300 mA.h/g comme capacité théorique. Les bornes de cyclage en potentiel sont 1,5 V et 4,8 V.

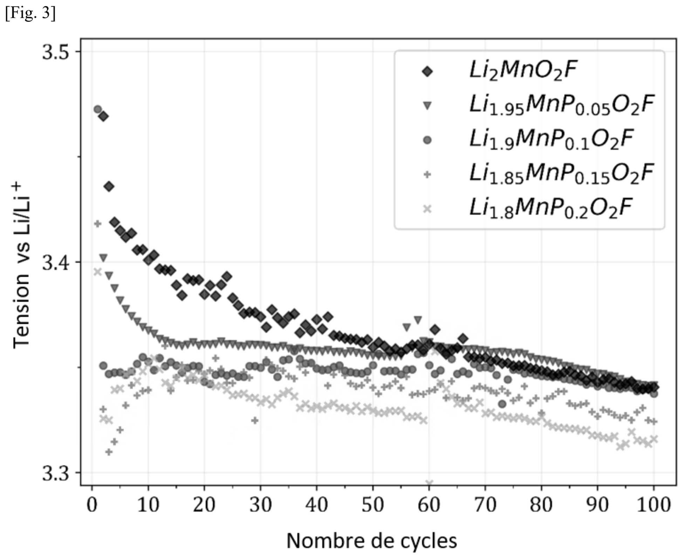

Les composés x = 0.05 et x = 0.1 présentent notamment une excellente stabilité en cyclage avec environ 150 mAh/g restant après 100 cycles, soit 75 % de plus que la référence. Le rôle du phosphore sur la structure du matériau peut également être étudié en traçant la moyenne des potentiels moyens de charge et décharge, visible en **Figure 3****.** Ce traitement permet de supprimer la contribution de la résistance ohmique à l'évolution du potentiel moyen.

## Revendications

1. Composé de formule (I) suivante :
Li₂₋ₓMnPₓO₂F (I),
avec : $0 < x \leq 0 , 25 .$

2. Composé de formule (I) selon la revendication 1, dans laquelle x est tel que 0 < x ≤ 0,20 ; en particulier tel que 0 < x ≤ 0,15 ; plus particulièrement tel que 0 < x ≤ 0,10.

3. Composé selon l'une quelconque des revendications précédentes, lequel est choisi parmi les composés suivants :
- Li_{1.95}MnP_{0.05}O₂F;
- Li_{1.90}MnP_{0.10}O₂F;
- Li_{1.85} MnP_{0.15}O₂F;
- Li_{1.80} MnP_{0.20}O₂F;
- Li_{1.75}MnP_{0.25}O₂F.

4. Composé selon l'une quelconque des revendications précédentes, lequel est de structure cubique désordonnée de type NaCl, ou substantiellement de structure cubique désordonnée de type NaCl.

5. Procédé de préparation d'un composé de formule (I) selon l'une quelconque des revendications précédentes, comprenant une étape de mécanosynthèse à partir des précurseurs suivants, en particulier sous forme de poudre :
- oxyde de lithium (Li₂O) et/ou Li₂CO₃,
- phosphate de lithium (Li₃PO₄),
- fluorure de lithium (LiF) et/ou MnF₂, et
- au moins un oxyde de manganèse.

6. Electrode, en particulier positive, notamment pour une pile ou un accumulateur métal-ion, comprenant un composé de formule (I) selon l'une quelconque des revendications 1 à 4.

7. Procédé de préparation d'une électrode, en particulier positive, notamment pour une pile ou un accumulateur métal-ion, ledit procédé comprenant une étape A) de mise en contact d'une poudre constituée de ou comprenant un composé de formule (I) selon l'une quelconque des revendications 1 à 4, un additif conducteur électronique, en particulier des particules de carbone, et optionnellement un liant, avec un support conducteur.

8. Pile ou accumulateur comprenant une électrode, en particulier positive, comprenant un composé de formule (I) selon l'une quelconque des revendications 1 à 4, ayant notamment une capacité théorique supérieure à 200 mAh/g.

9. Batterie comprenant une pile ou un accumulateur selon la revendication 8.

10. Système électroportatif ou adapté à la mobilité électrique, comprenant une batterie selon la revendication 9.
